# EUROPEAN PATENT SPECIFICATION

(11) **EP 1 282 322 B1**
(45) Date of publication and mention of the grant of the patent: **29.03.2006**
(21) Application number: 02016414.1
(22) Date of filing: 22.07.2002
(51) Int. Cl.: H04Q 7/30

(54) **Communications systems and mobile stations and installations for use therein**
Kommunikationssysteme und Mobilstationen und Installationen zur Verwendung darin
Systèmes de communication et stations mobiles et installations associés

(30) Priority: 01.08.2001 GB 0118673
(43) Date of publication of application: 05.02.2003
(73) Proprietor: MOTOROLA, INC., Schaumburg, IL 60196 (US)
(72) Inventor: Aitkenhead, Gary, Bramley, Hampshire RG26 5QF (GB); Urs, Kamala Diane, Bartlett, Illinois 60103 (US)
(74) Representative: McCormack, Derek James

(56) References cited:
- WO-A-91/05429
- US-A- 5 711 011
- US-A- 6 026 296
- US-A- 6 148 064

## Description

### Field of the Invention

The present invention relates to communication systems and mobile stations and installations for use therein. In particular, it relates to systems which include mobile radio transceivers and units which provide radio communications with such transceivers.

### Background of the Invention

Mobile radio transceiver units are also known in the art and referred to herein as mobile stations (MSs). The terms 'mobile radio transceiver unit' and 'mobile station (MS)' are intended to include within their meaning mobile and portable telephones and mobile and portable radios. Systems which include MSs and other units for radio communication with them are referred to herein as mobile radio communications systems.

Generally speaking, a mobile radio communications system provides communications to and from MSs in a given region. Such a region is often referred to as a cell. Many of such systems are able to provide communication with a system or systems covering another or other regions via a system interface link. The other system(s) may be in a nearby region or it may be in a remotely distant region, e.g. in another country.

Communications between MSs are carried out using the communication mode or modes that the system is designed to use. Certain mobile radio communications systems operate in a half duplex mode whereas certain other systems and links between them operate in a full duplex mode. The present invention is related to systems which operate in these modes.

In a half duplex mode of communication between two MSs, a message is allowed to be sent by only one MS at a time. Thus, systems operating in this mode need to include a signalling procedure or protocol-to establish which MS is to be allowed to transmit. After a connection has been established by such a procedure a communication message, e.g. representing speech of a user, is sent by the MS which has been authorised to transmit. There is also a signalling procedure to indicate that a transmitted message has come to an end. Permission to transmit is commonly requested by a 'push to talk' mechanism. Permission to transmit is flipped back and forth as necessary between the two MSs to enable, for example, a two way conversation to take place. MSs including those which operate according to a half duplex procedure may operate according to the TETRA (Terrestrial Trunked Radio also known as Trans European Trunked Radio) standards laid down by ETSI (the European Telecommunications Standards Institute). TETRA is a modern digital standard system. The signals representing speech in such a system are in a digital ACELP (algebraic code excited linear prediction) format.

In contrast, a full duplex mode of communication is one wherein when a connection has been established between two transceivers either transceiver may transmit at any time. Public Switched Telephone Networks (PSTNs) generally operate in a full duplex mode. The signals representing speech in this mode are generally in a different format from those representing speech in a half duplex mode, e.g. speech signals are in a PCM (pulse code modulation) format in the full duplex mode.

Additionally, the manner in which signals are sent to denote transceiver identity numbers initially to make contact between users is different for half duplex systems from that used for full duplex systems.

Generally, networks such as PSTNs which provide links between full duplex units and systems do not currently support half duplex communications and vice versa. Thus, when a first subscriber moves from one region to another and a second subscriber within the original region attempts to make, for example, a half duplex call to the first subscriber, the second subscriber will find that such a call will fail if the link between the systems in the two regions is a full duplex link only.

In a variety of different user situations, e.g. relating to commercial dealings, industrial operations, crime control, traffic control, military operations or various types of emergency, the failure to establish communication in these circumstances could be regarded as serious or even critical. Thus, the incompatability between systems operating in half duplex and full duplex modes is a serious problem. The present invention is concerned with providing a solution to this problem.

In US-A-6026296, a call set up procedure is described in which a communication device in a system (an existing telephone network) requests set up of a dispatch call by sending a call request signal addressed to a dispatch processor outside the system (i.e. outside the existing cellular network). The dispatch processor determines which target devices are to receive the call and determines that some of the target devices to receive the call are outside the system and accordingly itself sets up the call as a full duplex call.

In US-A-6,148,064 a dispatch processor determines that a targeted communication unit cannot be reached and causes a message to be sent to a voice mail system to leave a voice mail message.

### Summary of the Invention

According to a first aspect of the present invention there is provided mobile radio communication system which is operable to provide subscribers having mobile stations with a plurality of communication types by which they can communicate with others either using that system or another system by way of an interface link, said communication types comprising a full duplex format and a half duplex format, the system including at least a first mobile station and a system infrastructure, wherein when a communication is initiated in a half duplex format by the first mobile station in a region served by the system and is intended for receipt by a second mobile station in a region not served by the system but served by another system connected to said system by a full duplex link, a processor is operable: (i) to detect that the communication has been initiated in half duplex format and has to reach the second mobile station in full duplex format; and (ii) to generate and send a signal in response; characterised in that the processor is included within the infrastructure of the system and is operable to send the response signal to a transceiver within the system, the response signal indicating that the communication has to be re-sent in full duplex format, and the transceiver is included in the first mobile station or in a base transceiver station serving the mobile station and is itself operable following receipt of the response signal to initiate re-sending of the communication to the second mobile station in full duplex format.

The transceiver which receives the response signal may thus be a base transceiver (BT). Such a transceiver is a fixed unit usually forming part of an installation known in the art as a base transceiver station (BTS) which may comprise a plurality of BTs operating according to a common method to provide a common communications resource. A BT sends radio communications to and receives communications from MSs within the region or cell that it covers either directly or via one or more intermediate transceiver units.

In this specification the expression 'subscriber' includes members of a user group who are collectively permitted to use the system, e.g. because they belong to a common company or organisation for whose benefit the system is operated, as well as individuals who subscribe directly to an operator of the system.

In this specification the expression 'call' is used to indicate initiation of a communication between two or more parties. The information to be transmitted in the communication when established may comprise information representing speech and/or data (e.g. text) and/or one or more other forms, e.g. picture or video information.

The full duplex interface link referred to earlier may comprise a public switched telephone network, PSTN. The full duplex link may itself comprise a plurality of links of different types, e.g. landline, radio and optionally other links. Communications sent in full duplex format by MSs by the system according to the invention may be introduced into the PSTN and extracted from the PSTN by a switching controller known in the art as a mobile switching centre (MSC) (specifically a gateway MSC) which is a unit conventionally used to provide introduction and extraction of communications to and from MSs into and out of such a network. Communications between the MSs and the switching controller may be provided by one or more intermediate transceivers, e.g. one or more BTs as referred to earlier.

The system according to the first aspect of the invention may comprise a plurality of MSs each of which is operable to communicate in both a half duplex mode and a full duplex mode, one or more BTs which can communicate with the MSs (and with other BTs if there are more than one), a half duplex controller known in the art as a dispatch applications processor (DAP) which controls half duplex communications within the system and a switching controller or MSC which controls transfer of communications into and out of the full duplex link to one or more other systems. Two or more of the fixed units in such a system, namely two or more of (i) the half duplex processor (ii) the switching controller and (iii) the BT or BTS (or one of the BTs or BTSs) may be located together in a single installation known in the art as a switching and management infrastructure (SwMI).

Systems which include the various component units specified above are known in the prior art but such known systems are not designed or operable to solve the problem of incompatability between half duplex and full duplex modes described earlier which is beneficially solved in accordance with the present invention.

The system according to the first aspect of the invention may include a register or database (referred to herein as a 'home location register' or 'HLR') in which is stored data relating to the identity and location of MSs of subscribers to the system including such MSs when in a region served by a system other than the said system but which has a communication link to the said system. Information relating to the location of MSs of subscribers to the system may be obtained by the HLR in a known manner by use of one or more system to system links which may include one or more full duplex links, e.g. via one or more PSTN networks referred to earlier.

The system according to the first aspect of the invention may include processing means which is operable in a manner so as to receive a half duplex call request signal from the first MS and to detect that the requested call cannot reach the second MS directly in half duplex format, e.g. by receiving data from said register or HLR indicating the location of the second MS. The processing means may comprise or may be contained within the half duplex controller or DAP referred to earlier.

The processing means may be operable to send a signal back to the first MS to indicate that the half duplex call to the second MS cannot be made in the manner requested. The signal sent by the processing means may be provided to at least one intermediate transceiver, e.g. a BT or BTS, and delivered onward by the at least one intermediate transceiver which also generates a release signal which releases half duplex transmit permission from the first MS. The BT or BTS may be that which routes signals to the duplex signal processor or the switching controller. In this case, the first MS may contain a processor which is operable: (i) to provide information to the subscriber using that MS that the half duplex call has failed; and/or (ii) to provide information to the subscriber that the call may be made in an alternative described manner which is recognised by the MS as a full duplex call; and/or (iii) to provide information to the subscriber as to how to initiate a call to the second MS in a manner which the first MS recognises as a full duplex call; and/or (iv) to retrieve from a memory and provide information to the subscriber information relating to a telephone number associated with the second MS by which the second MS can be reached by a full duplex call; and/or (v) to indicate to the subscriber how a call to the second MS in a manner recognised by the first MS as a full duplex call can be automatically initiated using the first MS; (v) automatically to initiate a full duplex call to the second MS.

Alternatively, or in addition, the said processing means, e.g. half duplex controller or DAP, on detecting that the half duplex call cannot reach the second MS directly, may be operable to send a signal to a transceiver which is in communication with the full duplex interface link indicating that the half duplex call has failed. The transceiver may conveniently comprise a BT or BTS serving (i.e. sending radio communications to and receiving radio communications from) the first MS either directly or via one or more intermediate transceivers. The BT or BTS may be directly connected to, e.g. may be part of a common SwMI together with, the half duplex controller. The BT or BTS may be connected to, e.g. may be part of a common SwMI together with, a switching controller, e.g. a MSC, connected to the full duplex interface link.

In the form of the invention where a BT automatically calls the second MS in full duplex format, the BT may be operable to convert communication information received by the BT in half duplex format from that format into a full duplex format. Such a conversion procedure may be carried out in the manner invented by the present inventors and described in Applicant's International (PCT) patent application publication number WO02/03581.

In a network according to a second aspect of the invention there are at least two systems according to the first aspect linked by a full duplex link. At least one BT in each system may be employed to convert communication signals to be sent by itself to a served MS from a full duplex format to a half duplex format and to convert communication signals received from a served MS from a half duplex format to a full duplex format. A method of communication between a MS included in and served by one of systems to another MS included in and served by another of the systems via such BTs and a full duplex link between them includes the step of establishing transmit permission at a maximum of one of said MSs at any given time. This is the method described in the said PCT Application. One of said MSs may thus be a calling MS and the other of said MSs a called MS, the method further comprising the step of establishing, prior to sending said communication, a default transmit permission condition wherein one of said MSs has transmit permission. The step of maintaining the half duplex transmit permission of either of said MSs may be made at either of said BTs.

In a method of communicating by a system according to the first aspect of the invention, e.g. in a network according to the second aspect of the invention, the conversion of communication formats of signals representing speech carried out by the BTs may be between a half duplex format which comprises a non-PCM format, such as a coded speech digital signal format, and a full duplex format which comprises a pulse code modulation (PCM) signal format. The non-PCM signal format may comprise a Terrestrial Trunked Radio (TETRA) digital signal format. Such a conversion is described in the said PCT Application.

The method of communication in the system according to the first aspect of the invention or in the network according to the second aspect of the invention may further comprise the step of establishing connection along the full duplex link enabling the communication to take place by a procedure wherein a first BT produces a call set up signal identifying the second MS, the call set up signal being in a format which is recognised by the full duplex system, e.g. especially a DTMF (dual tone multi-frequency) format which is recognised by many PSTNs. Such a call set up signal may be sent via a speech channel of the full duplex link. In such a procedure, the second BT in another system may be operable to convert such a set up signal back into an identity signal recognised by a second MS in that system as a half duplex call set up signal. Again, is described in the said PCT Application.

According to the present invention in a third aspect there is provided a mobile station for use in a system according to the first aspect and which is operable to receive a response signal from a dispatch processor which is included within the infrastructure of the system, the response signal indicating that a communication sent by the mobile station in half duplex format and which has been detected by the dispatch processor has to be re-sent in full duplex format, the mobile station also containing a processor which is operable in response to receipt of the response signal: (i) to provide information to the subscriber using that mobile station that the half duplex call has failed; and/or (ii) to provide information to the subscriber that the call may be made in an alternative described manner which is recognised by the mobile station as a full duplex call; and/or (iii) to provide information to the subscriber as to how to initiate a call to the second mobile station in a manner which the first mobile station recognises as a full duplex call; and/or (iv) to retrieve from a memory and provide information to the subscriber information relating to a telephone number associated with the second mobile station by which the second mobile station can be reached by a full duplex call; and/or (v) to indicate to the subscriber how a call to the second mobile station in a manner recognised by the first mobile station as a full duplex call can be automatically initiated using the first MS; and/or (v) automatically to initiate a full duplex call to the second mobile station.

Thus, the present invention beneficially provides a solution, which is inexpensive and relatively easy to implement by those skilled in the art, to the important problem of calls initiated in a system in a half duplex format failing because the target MSs have migrated to a regions not served by the system.

Embodiments of present invention will now be described with reference to the accompanying drawings, in which:

### Brief Description of the Drawings

Figure 1 is a block schematic diagram illustrating a communication system in which the present invention can be implemented; and
Figures 2 and 3 are signalling diagrams illustrating the operation of a system embodying the present invention.

### Description of Embodiments of the Invention

Referring to Figure I, there is shown schematically a first mobile radio communication system 1 and a second mobile radio communication system 2 and an interface link 3 between them. The first system 1 comprises a first SwMI 10 and a plurality of MSs, two of which, MSs 19 and 20, are shown. The second system 2 comprises a second SwMI 11 and a plurality of MSs, two of which, MSs 21 and 22 are shown. The MSs 19, 20 in the system 1 can communicate directly with the SwMI 10 and the MSs 21, 22 in the system 2 can communicate directly with the SwMI 11. The MSs 19,20 can communicate with each other in a half duplex mode via the SwMI 10. Such communications are sent to and received from the MSs 19,20 by a BTS 14 and the control of such communications is by a DAP 16. The BTS 14 and the DAP 16 are sub-systems within the SwMI 10. Similarly, the MSs 21,22 can communicate with each other in a half duplex mode via the SwMI 11. Such communications are sent to and received from the MSs 21, 22 by a BTS 24 and the control of such communications is by a DAP 26. The BTS 24 and the DAP 26 are sub-systems within the SwMI 11.

The MSs 19,20 can also communicate in a full duplex mode. Communications from the MSs 19 or 20 can for example be sent via the BTS 14 to a MSC 15 also incorporated in the SwMI 10. The MSC 15 is linked by a direct link (call control connection) 17 to a PSTN 12. Likewise, the MSs 21,22 can also communicate in a full duplex mode. Communications from the MSs 21 or 22 can for example be sent via the BTS 24 to a MSC 25 also incorporated in the SwMI 11. The MSC 25 is linked by a direct link (call control connection) 27 to the PSTN 12. Thus, full duplex communications can be sent for example from the MS 20 to the MS 21 and vice versa via the PSTN 12 in a known manner.

The BTS 14 routes calls to the DAP 16 or to the MSC 15 depending on whether the call is made in a half duplex or full duplex manner. Likewise, the BTS 24 routes calls to the DAP 26 or to the MSC 25 depending on whether the call is made in a half duplex or full duplex manner.

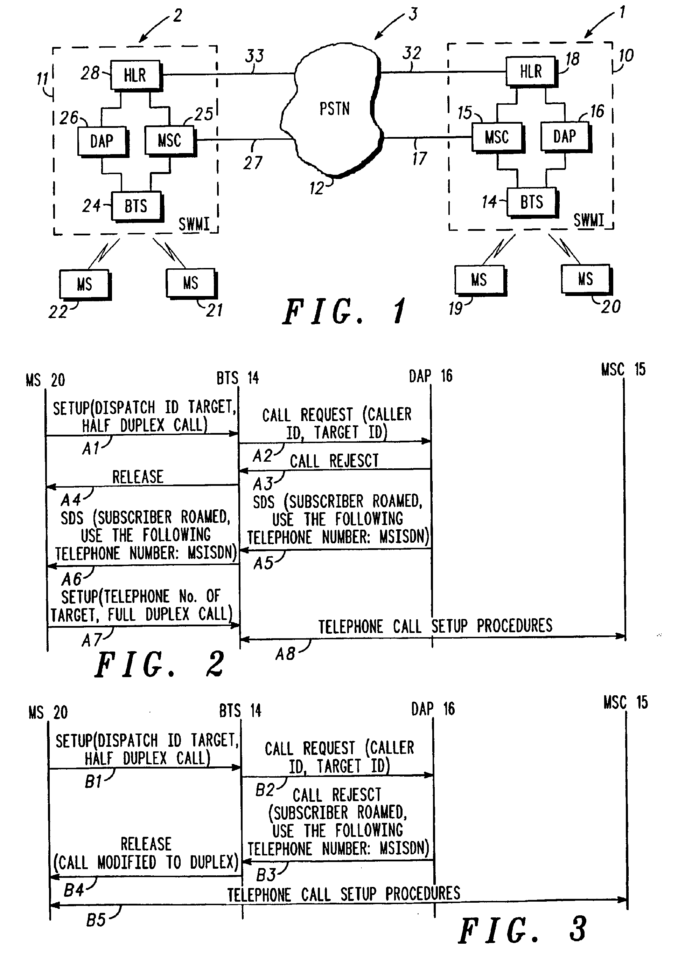

The SwMI 10 incorporates a home location register (HLR)18. The register 18 maintains a record of information about the MSs of subscribers to the system 1. In particular, the HLR 18 maintains a record of the identity of the MSs and their location. The identity is determined for example by the call numbers, eg. ISDN numbers, which can be used to contact the MSs. The location information relates to the location of the current cell or system which can serve the MS in question. Thus, in the embodiment shown in Figure 1, the HLR 18 is aware that the MS 21 is currently being served by the SwMI 11. The HLR 18 receives information about the location of MSs directly in contact with the SwMI 10 as well as information about MSs in contact with SwMIs in other systems, such as SwMI 11, which are linked to SwMI 10, e.g. via PSTN 12. The HLR 18 is connected to the PSTN 12 by a mobility management (MAP) connection 32 which carries mobility management signalling. Thus, the HLR 18 may gather and store the identity and location information about MSs of subscribers to the system 1 via the MAP connection 32. This may be carried out in a manner which is known per se. Information in the HLR 18 is regularly updated. Similarly, information about the identity and location of MSs which subscribe to system 2 is stored by a HLR 28 in the SwMI 11 which is connected to the PSTN 12 by a MAP connection 33.

The HLR 18 is accessible by the DAP 16. Thus, the DAP 16 receives information from the HLR 18 about the identity and location of MSs of subscribers to system 1. If such a MS has migrated to a region not served directly by SwMI 10 the HLR 18 and the DAP 16 by its access to the HLR 18 are aware of this. Thus, the DAP 16 is aware that the MS 21 has migrated to the region served by the SwMI 11 in the system 2. The DAP 16 can thereby determine that a half duplex call made for example by the MS 20 to the MS 21 will fail because the PSTN 18 and the links 17, 27 do not support half duplex communications.

Thus, when the DAP 16 receives from the BTS 14 a half duplex call request from MS 20, the HLR 18 is addressed by the DAP 16. If the MS to which the call is to be transmitted has moved to another system, such as the MS 21 having moved to system 2 as shown in Figure 1, the HLR 18 communicates this information to the DAP 16. In a conventional arrangement, such a call would fail, but in the present system embodying the invention, the DAP 16 detects this condition and is operable to respond in one of the following ways.

In a first way of responding, the DAP 16 generates and transmits a signal comprising a call failure message to the BTS 14 along with a signal such as telephone number identifying the target MS, i.e. MS 21. The BTS 14 relays this information to the call originating MS 20. The information comprising the call failure message can for example be transmitted to the MS 20 by use of a text message signal, e.g. a TETRA Short Data Service (SDS)message, where the system 1 is a TETRA system, or as an extra field in the call failure message.

A processor within the MS 20 recognises the call failure message and produces a corresponding message to the subscriber which may for example be displayed on a display of the MS 20. The message displayed to the subscriber may include the ISDN telephone number of MS 21 to be called by the MS via a full duplex link. Alternatively, or in addition, the message provided by the MS 20 to the subscriber may be an audible alert signal, which may optionally provide the ISDN telephone number of the MS 20 in audible form.

The MS 20 may be operable to initiate a full duplex telephone call to the MS 21 when requested to do so by the subscriber. For example, the MS 20 may include a button or key to be pressed or a touch sensitive or soft key to be touched to indicate that the MS 20 should proceed to make a full duplex call. A processor of the MS 20 will recognise the signal produced internally in the MS 20 by this instruction and will respond by automatically making the call in a full duplex format initially by calling the ISDN telephone number of MS 20. Alternatively, the ISDN telephone number to be called may be entered by the subscriber into MS 20.

Alternatively, when the call failure message is received by the MS 20, the MS 20 may be operable to initiate a full duplex call automatically. The MS 20 may provide a message to the subscriber, in a visual display and/or audible form, indicating that this action is being taken.

However the full duplex call by the MS 20 is initiated, it is sent in full duplex format via the BTS 14, MSC 15, link 17, PSTN 12, link 27, MSC 25 and BTS 24 eventually reaching the MS 21.

In the second way of responding, the DAP 16 generates and transmits a signal comprising a call failure message to the BTS 14 along with a message identifying the MS to be called, i.e. the MS 21, e.g. by providing the ISDN telephone number of MS 21. The BTS 14 then automatically initiates a full duplex format telephone call to the MS 21 which is sent via MSC 15, link 17, PSTN 12, link 27, MSC 25 and BTS 24 eventually reaching the MS 21. The BTS 14 may allow the MS 20 to continue the call in half duplex format and thereby serve to convert the format of the call by the MS 20 from half duplex to full duplex format. In this form, the communication may proceed in the manner described in the PCT Application specified earlier wherein the transmission of half duplex signalling messages is controlled by the BTS 14 and/or the BTS 24. In this case, the BTS 24 converts the full duplex format of the call back into half duplex format. Likewise, in a reply from MS 21 to MS 20, the BTS 24 converts the format of the call into full duplex format and the BTS 15 converts the call back into half duplex format.

Alternatively, the BTS 14 may respond to the call failure message from the DAP 16 by sending a signalling message to the MS 20 which causes the MS 20 automatically to change the format of the call to full duplex format at the MS 20. The BTS 14 may continue to make the call on behalf of the MS 20 in full duplex format.

The signalling sequences for examples of above described alternative procedures of operation of the system 1 are illustrated in Figures 2 and 3. In these Figures, the vertical lines represent individual units of the system 1 which are also the start or end points of signals sent between these units. The units concerned are the MS 20, the BTS 14, the DAP 16 and the MSC 15. The individual signals are indicated in Figures 2 and 3 by horizontal lines.

The signalling sequence for a first procedure A is illustrated in Figure 2 and comprises the following steps:
A1. The originating subscriber sends a half duplex call request from the MS 20 to the BTS 14.
A2. The call request is routed by the BTS 14 to the DAP 16.
A3. The call is rejected. The DAP 16 determines that the subscriber using MS 21 has migrated to another system by consulting the HLR 18. Alternatively the system attempts to communicate with MS 21 and, in the event that communication cannot be achieved, determines that the call is non-routable as a half duplex call. A corresponding message is sent to the BTS 14.
A4. The BTS 14 releases the half duplex call transmit permission from MS20.
A5. The DAP 16 obtains from the HLR 18 the MS-ISDN number of the migrated MS 21. The DAP composes and sends to the BTS 14 a short data message (SDS) containing the MS-ISDN number of the MS 21. The message also indicates that this subscriber has migrated and is reachable through this telephone number. An example is: "The subscriber you are calling is outside the coverage area of this system. You may reach the subscriber at the following telephone number: [MS-ISDN of MS 21]"
A6. The message is relayed by the BTS 14 to the MS 20 and delivered by the MS 20 to the user thereof.
A7. The user of MS 20 now initiates a full duplex call. The MS 20 receives a full duplex call instruction from the user, causing the MS 20 to send to the BTS 14 a full duplex call set up request to dial the MS-ISDN telephone number of MS 21.
A8 The BTS 14 establishes a call set up procedure on behalf of MS 20.

The signalling sequence for an alternative procedure B is illustrated in Figure 3 and comprises the following steps:
B1. The MS 20 sends a half duplex call request to the BTS 14.
B2. The call request is routed by the BTS 14 to the DAP 16.
B3. The DAP 16 determines that MS 21 has migrated to another system by consulting the HLR 18. Alternatively the system attempts to communicate with the MS 21 and, in the event that communication in half duplex format cannot be achieved, determines that the call has to be rejected as a non-routable call. The DAP 16 prepares a call reject message to send to the BTS 14. The DAP 16 obtains the MS-ISDN number of the MS 21 and includes this in the message. The DAP 16 sends the message to the BTS 14.
B4. The BTS 14 on receiving and processing this reject message indicates to the call originating MS 20 that the call is being modified to full duplex. This message may be delivered when received by the MS 20 to the user of the MS 20. Alternatively, the reject message can be sent by the BTS 14 to the originating MS 20. In this case, the MS 20 can be operable automatically to initate a full duplex call request to the MS-ISDN number of MS 21 which is contained in the reject message.
B5. The full duplex call is set up by the BTS 14 either upon request by the MS 20 or automatically by the BTS 14. In both cases the BTS 14 routes the full duplex call to the MSC 15. The MSC 15 connects the call to the MS 21 in the manner described earlier.

If a MS of a subscriber to system 2 migrates to another system, e.g. to system 1, system 2 operates in one of the ways described earlier (for system 1) to detect that a half duplex call cannot be made to the target MS and to arrange calling of the target MS by a full duplex procedure.

## Claims

1. A mobile radio communication system (1) which is operable to provide subscribers having mobile stations, MSs, with a plurality of communication types by which they can communicate with others either using that system or another system (2) by way of an interface link (12), said communication types comprising a full duplex format and a half duplex format, the system (1) including at least a first mobile station, MS, (20) and a system infrastructure (10), wherein when a communication is initiated in a half duplex format by the first mobile station in a region served by the system and is intended for receipt by a second mobile station (21) in a region not served by the system but served by another system (2) connected to said system by a full duplex link (12), a processor (16) is operable: (i) to detect that the communication has been initiated in half duplex format and has to reach the second mobile station in full duplex format; and (ii) to generate and send a signal in response;
wherein the processor (16) is included within the infrastructure (10) of the system and is operable to send the response signal to a transceiver within the system, the response signal indicating that the communication has to be re-sent in full duplex format, and the transceiver is included in the first mobile station (20) or in a base transceiver station (14) serving the mobile station and is itself operable following receipt of the response signal to initiate re-sending of the communication to the second mobile station in full duplex format.

2. A system according to claim 1 wherein said transceiver is included in the first mobile station and wherein the mobile station includes a processor which is operable to carry out one or more of the following steps: (i) to provide information to the subscriber using that mobile station that the half duplex call has failed; (ii) to provide information to the subscriber that the call may be made in an alternative described manner which is recognised by the MS as a full duplex call; (iii) to provide information to the subscriber as to how to initiate a call to the second mobile station in a manner which the first mobile station recognises as a full duplex call; (iv) to retrieve from a memory and provide information to the subscriber information relating to a telephone number associated with the second mobile station by which the second mobile station can be reached by a full duplex call; (v) to indicate to the subscriber how a call to the second mobile station in a manner recognised by the first mobile station as a full duplex call can be automatically initiated using the first mobile station; (vi) automatically to initiate a full duplex call to the second mobile station.

3. A system according to claim 1 or claim 2 and which includes a switching controller (15) which in operation is connected to a full duplex link (12) to one or more other systems, the said transceiver (14) being operably connected to the switching controller (15).

4. A system according to any one of the preceding claims and which is connected in operation to a full duplex link (12) comprising a public switched telephone network, PSTN.

5. A system according to any one of the preceding claims and which comprises a plurality of multi-mode mobile stations (19, 20) each of which is operable to communicate in each of a half duplex mode and a full duplex mode, one or more base transceivers (14) which can communicate with the mobile stations, a half duplex controller (16) operable to control half duplex communications within the system and a switching controller (15) which in operation controls transfer of communications into and out of a full duplex link (12) to one or more other systems.

6. A system according to claim 5 and wherein two or more of the fixed units in such a system namely two or more of (i) the half duplex processor (ii) the switching controller and (iii) the base transceiver or base transceivers are located together in a single switching and management installation.

7. A system according to claim 5 or claim 6 and wherein the base transceiver (14) or at least one of the base transceivers is operable to route half duplex communications from mobile stations (19, 20) of the system to the half duplex processor (16) and to route full duplex communications from MSs of the system to the switching controller (15).

8. A system according to any one of the preceding claims and which includes a register (18) in which is stored data relating to the identity and location of mobile stations of subscribers to the system including such mobile stations (21) when in a region served by a system other than the said system but which has a communication link (12) to the said system.

9. A system according to claim 8 and wherein the system is operable such that information relating to the location of mobile stations of subscribers to the system is obtained by the register (18) by use of information communicated within the system and by use of one or more system to system links (32, 33).

10. A system according to any one of the preceding claims and which includes a half duplex controller (16) including a processor which is operable to receive a half duplex communication request signal from the said first mobile station in the system and to detect that the requested communication cannot reach the second mobile station directly in half duplex format.

11. A system according to claim 10 and which includes a register (18) in which is stored data relating to the identity and location of mobile stations of subscribers to the system (1) including such mobile stations when in a region served by a system (2) other than the said system but which has a communication link (12) to the said system (1) and wherein the processor is operably connected to the register (18) and is operable to detect that the second mobile station (21) is not in a region served by the system (1) by reference to information from the register (18) and to generate a signal accordingly.

12. A system according to claim 11 and wherein the signal generated by the processor includes a telephone number by which the second MS may be reached via a full duplex link.

13. A system according to claim 11 or claim 12 and which is operable to send the signal generated by the processor to the first MS (20) to indicate that the half duplex communication to the second MS (21) cannot be made in the manner requested.

14. A system according to claim 11 or claim 12 and wherein in operation the signal generated by the processor is provided to at least one intermediate transceiver (14) and delivered onward by the at least one intermediate transceiver which also generates a release signal which releases half duplex transmit permission from the first mobile station.

15. A system according to claim 1 and wherein in operation the said transceiver of the base transceiver (14) automatically calls the second MS (20) in full duplex format, the base transceiver being operable to convert communication information received by the base transceiver in half duplex format from that format into a full duplex format and/or vice versa.

16. A system according to any one of the preceding claims and which is operable in a manner such that signals representing speech sent in the full duplex format are in a pulse code modulation signal format and signals representing speech sent in a half duplex format are signals in a non-pulse code modulation format.

17. A system according to claims 16 and wherein the non-pulse code modulation signal format comprises a digital signal format defined in the Terrestrial Trunked Radio TETRA standard.

18. A communications network including at least two systems (1, 2) according to any one of the preceding claims linked by a full duplex link (12).

19. A mobile station (20) for use in a system (1) according to claim 1 and which is operable to receive a response signal from a dispatch processor (16) which is included within the infrastructure (10) of the system, the response signal indicating that a communication sent by the mobile station in half duplex format and which has been detected by the dispatch processor has to be re-sent in full duplex format, the mobile station also containing a processor which is operable in response to receipt of the response signal: (i) to provide information to the subscriber using that mobile station that the half duplex call has failed; and/or (ii) to provide information to the subscriber that the call may be made in an alternative described manner which is recognised by the mobile station as a full duplex call; and/or (iii) to provide information to the subscriber as to how to initiate a call to the second mobile station in a manner which the first mobile station recognises as a full duplex call; and/or (iv) to retrieve from a memory and provide information to the subscriber information relating to a telephone number associated with the second mobile station by which the second mobile station can be reached by a full duplex call; and/or (v) to indicate to the subscriber how a call to the second mobile station in a manner recognised by the first mobile station as a full duplex call can be automatically initiated using the first MS; and/or (vi) automatically to initiate a full duplex call to the second mobile station.

20. A system (1) according to claim 5 and wherein the half duplex controller (16) includes a processor which is operable to receive a half duplex communication request signal from the said first mobile station (20) in the system (1) and to detect that the requested communication cannot reach the second mobile station (20) directly in half duplex format.

21. A system according to claim 20 and wherein the infrastructure includes a register (18) in which is stored data relating to the identity and location of mobile stations of subscribers to the system including such mobile stations when in a region served by a system other than the said system but which has a communication link (12) to the said system and wherein the processor of the half duplex controller is operably connected to the register and is operable to detect that the second mobile station(20) is not in a region served by the system (1) by reference to information from the register and to generate a signal accordingly indicating a telephone number by which the second MS can be reached by a full duplex link.

## Patentansprüche

1. Mobiles Funkkommunikationssystem (1), das betriebsfähig ist, um Teilnehmern mit Mobilstationen MSs eine Mehrzahl von Kommunikationsarten zur Verfügung zu stellen, durch die sie mit anderen unter Verwendung dieses Systems oder eines weiteren Systems (2) mittels einer Schnittstellenverbindung (12) kommunizieren können, wobei die Kommunikationsarten ein Vollduplexformat und ein Halbduplexformat umfassen, wobei das System (1) zumindest eine erste Mobilstation MS (20) und eine Systeminfrastruktur (10) umfasst, wobei, wenn eine Kommunikation in einem Halbduplexformat durch die erste Mobilstation in einer Region initiiert wird, die durch das System bedient wird, und für einen Empfang durch eine zweite Mobilstation (21) in einer Region bestimmt ist, die nicht durch das System bedient wird, sondern durch ein weiteres System (2) bedient wird, das mit dem System durch eine Vollduplexverbindung (12) verbunden ist, ein Prozessor (16) betriebsfähig ist, um: (i) zu detektieren, dass die Kommunikation im Halbduplexformat initiiert wurde und die zweite Mobilstation im Vollduplexformat erreichen soll; und (ii) um als Antwort ein Signal zu erzeugen und zu senden;
wobei der Prozessor (16) in der Infrastruktur (10) des Systems enthalten ist und betriebsfähig ist, um das Antwortsignal an einen Transceiver innerhalb des Systems zu senden, wobei das Antwortsignal anzeigt, dass die Kommunikation im Vollduplexformat erneut zu senden ist, und wobei der Transceiver in der ersten Mobilstation (20) oder in einer Basistransceiverstation (14), die die Mobilstation bedient, umfasst ist, und selbst betriebsfähig ist, um nach dem Empfang des Antwortsignals, das erneute Senden der Kommunikation an die zweite Mobilstation im Vollduplexformat zu initiieren.

2. System nach Anspruch 1, wobei der Transceiver in der ersten Mobilstation umfasst ist und wobei die Mobilstation einen Prozessor umfasst, der betriebsfähig ist, um einen oder mehrere der folgenden Schritte auszuführen: (i) Informationen dem Teilnehmer, der die Mobilstation verwendet, zur Verfügung zu stellen, dass der Halbduplexanruf fehlgeschlagen ist; (ii) Informationen dem Teilnehmer zur Verfügung zu stellen, dass der Anruf auf eine alternative beschriebene Weise durchgeführt werden kann, die von der MS als Vollduplexanruf erkannt wird; (iii) Informationen dem Teilnehmer zur Verfügung zu stellen, wie ein Anruf an die zweite Mobilstation auf eine Weise zu initiieren ist, die die erste Mobilstation als Vollduplexanruf erkennt; (iv) Informationen aus einem Speicher abzurufen und dem Teilnehmer zur Verfügung zu stellen, wobei die Informationen sich auf eine Telefonnummer beziehen, die der zweiten Mobilstation zugeordnet ist, mit der die zweite Mobilstation über einen Vollduplexanruf erreicht werden kann; (v) dem Teilnehmer anzuzeigen, wie ein Anruf an die zweite Mobilstation auf eine Weise, die von der ersten Mobilstation als ein Vollduplexanruf erkannt wird, automatisch unter Verwendung der ersten Mobilstation initiiert werden kann; (vi) automatisch eine Vollduplexanruf an die zweite Mobilstation zu initiieren.

3. System nach Anspruch 1 oder 2, das einen Switching-Controller (15) umfasst, der im Betrieb über eine Vollduplexverbindung (12) mit einem oder mehreren weiteren Systemen verbunden ist, wobei der Transceiver (14) betriebsfähig mit dem Switching-Controller (15) verbunden ist.

4. System nach einem der vorhergehenden Ansprüche, das im Betrieb mit einer Vollduplexverbindung (12) verbunden ist, die ein öffentliches leitungsvermitteltes Telefonnetz ("PSTN = Public Switched Telephone Network") umfasst.

5. System nach einem der vorhergehenden Ansprüche, das eine Mehrzahl von Multimode-Mobilstationen (19, 20), von denen jede betriebsfähig ist, um sowohl in einem Halbduplexmodus als auch in einem Vollduplexmodus zu kommunizieren, eine oder mehrere Basistransceiver (14), die mit den Mobilstationen kommunizieren können, einen Halbduplexcontroller (16), der betriebsfähig ist, Halbduplexkommunikationen innerhalb des Systems zu steuern, sowie einen Switching-Controller (15) umfasst, der im Betrieb die Übertragung von Kommunikationen zu und von einer Vollduplexverbindung (12) an ein oder mehrere weitere Systeme steuert.

6. System nach Anspruch 5, wobei zwei oder mehrere der festen Einheiten in einem derartigen System, das heißt zwei oder mehrere der folgenden, (i) der Halbduplexprozessor, (ii) der Switching-Controller sowie (iii) der Basistransceiver beziehungsweise die Basistransceiver zusammen in einer einzigen Vermittlungs- und Verwaltungseinrichtung angeordnet sind.

7. System nach Anspruch 5 oder 6, wobei der Basistransceiver (14) oder zumindest einer der Basistransceiver betriebsfähig ist, um Halbduplexkommunikationen von den Mobilstationen (19, 20) des Systems an den Halbduplexprozessor (16) zu routen und Vollduplexkommunikationen von MSs des Systems an den Switching-Controller (15) zu führen.

8. System nach einem der vorhergehenden Ansprüche, das ein Register (18) umfasst, in dem Daten gespeichert sind, die die Identität und den Ort von Mobilstationen von Teilnehmern an dem System betreffen, einschließlich solcher Mobilstationen (21), wenn sie sich in einer Region befinden, die von einem anderen als dem System bedient werden, das aber eine Kommunikationsverbindung (12) zu dem System hat.

9. System nach Anspruch 8, wobei das System so betriebsfähig ist, dass Informationen, die den Ort der Mobilstationen der Teilnehmer an dem System betreffen, durch das Register (18) erhalten werden, unter Verwendung von Informationen, die innerhalb des Systems kommuniziert werden und unter Verwendung einer oder mehrerer System-zu-System-Verbindungen (32, 33).

10. System nach einem der vorhergehenden Ansprüche, das einen Halbduplexcontroller (16) umfasst, der einen Prozessor umfasst, der betriebsfähig ist, um ein Halbduplex-Kommunikationsanfragesignal von der ersten Mobilstation in dem System zu erhalten und um zu detektieren, dass die angefragte Kommunikation nicht die zweite Mobilstation direkt im Halbduplexformat erreichen kann.

11. System nach Anspruch 10, das ein Register (18) umfasst, in dem Daten gespeichert werden, die die Identität und den Ort von Mobilstationen von Teilnehmern an den System (1) betreffen, einschließlich solcher Mobilstationen, wenn sie sich in einer Region befinden, die durch ein anderes System (2) als das System bedient wird, das aber eine Kommunikationsverbindung (12) an das System (1) aufweist, und wobei der Prozessor betriebsfähig mit dem Register (18) verbunden ist, und betriebsfähig ist, um zu detektieren, dass sich die zweite Mobilstation (21) nicht in einer Region befindet, die durch das System (1) bedient wird, unter Bezugnahme auf Informationen von dem Register (18), und um entsprechend ein Signal zu erzeugen.

12. System nach Anspruch 11, wobei das durch dem Prozessor erzeugte Signal eine Telefonnummer umfasst, mittels der die zweite MS über eine Vollduplexverbindung erreicht werden kann.

13. System nach Anspruch 11 oder 12, das betriebsfähig ist, um das durch den Prozessor erzeugte Signal an die erste MS (20) zu senden, um anzuzeigen, dass die Halbduplexkommunikation an die zweite MS (21) nicht auf die angefragte Weise durchgeführt werden kann.

14. System nach Anspruch 11 oder 12, wobei im Betrieb das durch den Prozessor erzeugte Signal zumindest einem Zwischentransceiver (14) zur Verfügung gestellt wird und durch den zumindest einen Zwischentransceiver weiterbefördert wird, der auch ein Freigabesignal erzeugt, das die Halbduplexübertragungserlaubnis von der ersten Mobilstation freigibt.

15. System nach Anspruch 1, wobei im Betrieb der Transceiver des Basistransceivers (14) automatisch die zweite MS (20) im Vollduplexformat anruft, wobei der Basistransceiver betriebfähig ist, um Kommunikationsinformationen, die mittels des Basistransceivers im Halbduplexformat empfangen werden, von diesem Format in ein Vollduplexformat und/oder umgekehrt zu konvertieren.

16. System nach einem der vorhergehenden Ansprüche, das betriebsfähig auf eine solche Weise ist, dass Signale, die Sprache darstellen, die in dem Vollduplexformat gesendet wird, in einem Pulscode-Modulationssignalformat sind und dass Signale, die Sprache darstellen, die in einem Halbduplexformat gesendet wird, Signale in einem Nicht-Pulscode-Modulationsformat sind.

17. System nach Anspruch 16, wobei das Nicht-Pulscode-Modulationssignalformat ein Digitalsignalformat umfasst, das in dem TETRA-Standard ("TETRA = Terrestrial Trunked Radio"/Terrestrischer Bündelfunk) definiert ist.

18. Kommunikationsnetzwerk, das zumindest zwei Systeme (1, 2) nach einem der vorhergehenden Ansprüche umfasst, die durch eine Vollduplexverbindung (12) verbunden sind.

19. Mobilstation (20) zur Verwendung in einem System (1) nach Anspruch 1, die betriebsfähig ist, ein Antwortsignal von einem Dispatch-Prozessor (16) zu empfangen, der in der Infrastruktur (10) des Systems umfasst ist, wobei das Antwortsignal anzeigt, dass eine Kommunikation, die mittels der Mobilstation im Halbduplexformat gesendet ist und die durch den Dispatch-Prozessor detektiert wurde, im Vollduplexformat erneut zu senden ist, wobei die Mobilstation auch einen Prozessor enthält, der betriebsfähig ist, um als Antwort auf den Empfang des Antwortsignals: (i) Informationen dem Teilnehmer, der diese Mobilstation verwendet, zur Verfügung zu stellen, dass der Halbduplexanruf fehlgeschlagen ist; und/oder (ii) Informationen dem Teilnehmer zur Verfügung zu stellen, dass der Anruf auf eine alternative beschriebene Weise durchgeführt werden kann, die durch die Mobilstation als ein Vollduplexanruf erkannt wird; und/oder (iii) Informationen dem Teilnehmer zur Verfügung zu stellen, wie ein Anruf an die zweite Mobilstation auf eine Weise zu initiieren ist, die die erste Mobilstation als Vollduplexanruf erkennt; und/oder (iv) Informationen von einem Speicher abzurufen und dem Teilnehmer zur Verfügung zu stellen, wobei die Informationen sich auf eine Telefonnummer beziehen, die der zweiten Mobilstation zugeordnet ist, mittels der die zweite Mobilstation über einen Vollduplexanruf erreicht werden kann; und/oder (v) dem Teilnehmer anzuzeigen, wie ein Anruf an die zweite Mobilstation auf eine Weise, die von der ersten Mobilstation als Vollduplexanruf erkannt wird, automatisch unter Verwendung der ersten MS initiiert werden kann; und/oder (vi) automatisch einen Vollduplexanruf an die zweite Mobilstation zu initiieren.

20. System (1) nach Anspruch 5, wobei der Halbduplexcontroller (16) einen Prozessor umfasst, der betriebsfähig ist, um ein Halbduplex-Kommunikationanfragesignal von der ersten Mobilstation (20) in dem System (1) zu empfangen, und um zu detektieren, dass die angefragte Kommunikation nicht die zweite Mobilstation (20) direkt im Halbduplexformat erreichen kann.

21. System nach Anspruch 20, wobei die Infrastruktur ein Register (18) umfasst, in dem Daten betreffend die Identität und den Ort von Mobilstationen von Teilnehmer an dem System gespeichert sind, einschließlich solcher Mobilstationen, wenn sie sich in einer Region befinden, die durch ein anderes System als durch das System bedient wird, aber eine Kommunikationsverbindung (12) an das System aufweist und wobei der Prozessor des Halbduplexcontrollers betriebsfähig mit dem Register verbunden ist und betriebsfähig ist, um zu detektieren, dass die zweite Mobilstation (20) sich nicht in einer Region befindet, die durch das System (1) bedient wird, unter Bezugnahme auf Informationen von dem Register, und um entsprechend ein Signal zu erzeugen, das eine Telefonnummer anzeigt, mittels der die zweite MS über eine Vollduplexverbindung erreicht werden kann.

## Revendications

1. Système de radiocommunication mobile (1) ayant pour fonction de proposer à des abonnés possédant des stations mobiles MS une pluralité de types de communication par lesquels ils peuvent communiquer les uns avec les autres en utilisant ce système ou bien un autre système (2) au moyen d'une liaison en interface (12), lesdits types de communication comprenant un format en duplex total et un format en semi duplex, le système (1) comprenant au moins un premier terminal de station mobile, MS, (20) et une infrastructure de système (10), dans lequel lorsqu'une communication est débutée dans un format en semi duplex par la première station mobile dans une région servie par le système et qu'elle est destinée à être reçue par une deuxième station mobile (21) dans une région qui n'est pas servie par le système mais qui est servie par un autre système (2) relié au dit système par une liaison en duplex total (12), un processeur (16) a pour fonction de : (i) détecter que la communication a débuté dans un format en semi duplex et qu'elle doit parvenir jusqu'à la deuxième station mobile dans un format en duplex total ; et (ii) générer et envoyer un signal en réponse ;
dans lequel le processeur (16) est incorporé à l'intérieur de l'infrastructure (10) du système et a pour fonction d'envoyer le signal de réponse vers un appareil émetteur-récepteur à l'intérieur du système, le signal de réponse indiquant que la communication doit être renvoyé dans un format en duplex total, et l'appareil émetteur-récepteur est incorporé à l'intérieur de la première station mobile (20) ou dans une station émettrice-réceptrice de base (14) servant de station mobile et a lui-même pour fonction, à la suite de la réception du signal de réponse, d'initier le renvoi de la communication vers la deuxième station mobile dans un format en duplex total.

2. Système selon la revendication 1 dans lequel ledit appareil émetteur-récepteur est incorporé à l'intérieur de la première station mobile, et dans lequel la station mobile comprend un processeur qui a pour fonction d'accomplir une ou plusieurs des étapes suivantes consistant à : (i) envoyer des informations vers l'abonné en utilisant cette station mobile pour lui indiquer que la communication en semi duplex a échoué ; (ii) envoyer des informations vers l'abonné pour lui indiquer que la communication peut être faite d'une manière alternative décrite, qui est reconnue par la MS comme étant une communication en duplex total ; (iii) envoyer des informations vers l'abonné pour lui indiquer de quelle façon initier une communication vers la deuxième station mobile d'une manière que la première station mobile reconnaît comme étant une communication en duplex total ; (iv) retrouver dans une mémoire, et envoyer vers l'abonné, des informations relatives à un numéro de téléphone associé à la deuxième station mobile par lequel la deuxième station mobile peut être jointe par une communication en duplex total ; (v) indiquer à l'abonné de quelle façon une communication envoyée vers la deuxième station mobile d'une manière qui est reconnue par la MS comme étant une communication en duplex total peut être initiée automatiquement en utilisant la première station mobile ; (vi) initier automatiquement une communication en duplex total vers la deuxième station mobile.

3. Système selon la revendication 1 ou 2, et qui comprend un dispositif de commande de commutation (15) qui, en fonctionnement, est connecté à une liaison en duplex total (12) vers un ou plusieurs autres systèmes, ledit appareil émetteur-récepteur (14) étant relié de façon opérationnelle au dispositif de commande de commutation (15).

4. Système selon l'une quelconque des revendications précédentes, et qui est raccordé, en fonctionnement, à une liaison en duplex total (12), comprenant un réseau téléphonique public avec commutation, PSTN (Public Switched Telephone Network).

5. Système selon l'une quelconque des revendications précédentes et qui comprend une pluralité de stations mobiles à mode multiples (19, 20), qui ont chacune pour fonction de communiquer dans chacun d'un mode en semi duplex et d'un mode en duplex total, une ou plusieurs stations émettrices-réceptrices de base (14) qui peuvent communiquer avec les stations mobiles, un contrôleur en semi duplex (16) qui a pour fonction de contrôler des communications en semi duplex à l'intérieur du système, et un dispositif de commande de commutation (15) qui, en fonctionnement, commande le transfert de communications dans et hors d'une liaison en duplex total (12) vers un ou plusieurs autres systèmes.

6. Système selon la revendication 5 et dans lequel deux ou plusieurs unités fixes dans un tel système et, plus précisément, deux ou plusieurs (i) du processeur de communication en semi duplex, (ii) du dispositif de commande de commutation, et (iii) de la station émettrice-réceptrice de base ou des stations émettrices-réceptrices de base, sont disposés ensemble dans une seule et unique installation de commutation et de gestion.

7. Système selon la revendication 5 ou 6 et dans lequel la station émettrice-réceptrice de base (14) ou au moins une des stations émettrices-réceptrices de base a pour fonction d'acheminer des communications en semi duplex depuis des stations mobiles (19, 20) du système vers le processeur de communication en semi duplex (16), et d'acheminer des communications en duplex total depuis des MS du système vers le dispositif de commande de commutation (15).

8. Système selon l'une quelconque des revendications précédentes et qui comprend un registre (18) dans lequel sont enregistrées des données relatives à l'identité et à la position de stations mobiles d'abonnés par rapport au système comprenant des stations mobiles (21) de ce genre lorsque dans une région qui est servie par un système autre que ledit système mais qui a une liaison de télécommunications (12) avec ledit système.

9. Système selon la revendication 8 et dans lequel le système a pour fonction de fonctionner de telle sorte que des informations relatives à la position de stations mobiles d'abonnés par rapport au système sont obtenues par le registre (18) en utilisant des informations communiquées à l'intérieur du système et en utilisant une ou plusieurs liaisons de système à système (32, 33).

10. Système selon l'une quelconque des revendications précédentes et qui comprend un contrôleur de communication en semi duplex (16) comprenant un processeur qui a pour fonction de recevoir un signal de demande de communication en semi duplex en provenance de ladite première station mobile dans le système, et de détecter que la communication requise ne peut pas parvenir jusqu'à la deuxième station mobile directement dans un format en semi duplex.

11. Système selon la revendication 10 et qui comprend un registre (18) dans lequel sont enregistrées des données relatives à l'identité et à la position de stations mobiles d'abonnés par rapport au système (1) comprenant des stations mobiles telles que lorsque dans une région servie par un système (2) autre que ledit système mais qui a une liaison de télécommunications (12) avec ledit système (1) et dans lequel le processeur est connecté de façon opérationnelle au registre (18) et qui a pour fonction de détecter que la deuxième station mobile (21) n'est pas dans une région servie par le système (1) sur la base d'informations en provenance du registre (18) et de générer un signal en conséquence.

12. Système selon la revendication 11 et dans lequel le signal produit par le processeur comprend un numéro de téléphone par lequel la deuxième MS peut être jointe par le biais d'une liaison en duplex total.

13. Système selon la revendication 11 ou 12 et qui a pour fonction d'envoyer le signal produit par le processeur vers la première MS (20) pour indiquer que la communication en semi duplex vers la deuxième MS (21) ne peut pas être faite de la manière requise.

14. Système selon la revendication 11 ou 12 et dans lequel, en fonctionnement, le signal produit par le processeur est envoyé vers au moins un appareil émetteur-récepteur intermédiaire (14) et transféré vers l'avant par le au moins un appareil émetteur-récepteur intermédiaire qui génère également un signal de remise qui remet une autorisation de transmission en semi duplex à partir de la première station mobile.

15. Système selon la revendication 1 et dans lequel, en fonctionnement, ledit appareil émetteur-récepteur de l'appareil émetteur-récepteur de base (14) appelle automatiquement la deuxième MS (20) dans un format en duplex total, la station émettrice-réceptrice de base ayant pour fonction de convertir des informations de communication reçues par la station émettrice-réceptrice de base dans un format en semi duplex depuis ce format en un format en duplex total et / ou vice versa.

16. Système selon l'une quelconque des revendications précédentes et qui a pour fonction de fonctionner de telle manière que des signaux représentant des paroles envoyées dans le format en duplex total se présentent sous un format de signal de modulation par impulsions codées, et des signaux représentant des paroles envoyées dans un format en semi duplex sont des signaux qui se présentent sous un format de modulation non par impulsions codées.

17. Système selon la revendication 16 et dans lequel le format de signal de modulation non par impulsions codées comprend un format de signal numérique défini selon la norme TETRA, TErrestrial Trunked RAdio.

18. Réseau de communication comprenant au moins deux systèmes (1, 2) selon l'une quelconque des revendications précédentes reliés par une liaison en duplex total (12).

19. Station mobile (20) for utilisation dans un système (1) selon la revendication 1 et qui a pour fonction de recevoir un signal de réponse en provenance d'un processeur de distribution (16) qui est incorporé à l'intérieur de l'infrastructure (10) du système, le signal de réponse indiquant qu'une communication envoyée par la station mobile dans un format en semi duplex et qui a été détectée par le processeur de distribution doit être renvoyée dans un format en duplex total, la station mobile contenant également un processeur qui a pour fonction, en réponse à la réception du signal de réponse, de : (i) envoyer des informations vers l'abonné en utilisant cette station mobile pour lui indiquer que la communication en semi duplex a échoué ; et / ou (ii) envoyer des informations vers l'abonné pour lui indiquer que la communication peut être faite d'une manière alternative décrite, qui est reconnue par la station mobile comme étant une communication en duplex total ; et / ou (iii) envoyer des informations vers l'abonné pour lui indiquer de quelle façon initier une communication vers la deuxième station mobile d'une manière que la première station mobile reconnaît comme étant une communication en duplex total ; et / ou (iv) retrouver dans une mémoire, et envoyer vers l'abonné, des informations relatives à un numéro de téléphone associé à la deuxième station mobile par lequel la deuxième station mobile peut être jointe par une communication en duplex total ; et / ou (v) indiquer à l'abonné de quelle façon une communication envoyée vers la deuxième station mobile d'une manière qui est reconnue par la MS comme étant une communication en duplex total peut être initiée automatiquement en utilisant la première ; et / ou (vi) initier automatiquement une communication en duplex total vers la deuxième station mobile.

20. Système (1) selon la revendication 5 et dans lequel le contrôleur de communication en semi duplex (16) comprend un processeur qui a pour fonction de recevoir un signal de demande de communication en semi duplex en provenance de ladite première station mobile (20) dans le système (1), et de détecter que la communication requise ne peut pas parvenir jusqu'à la deuxième station mobile (20) directement dans un format en semi duplex.

21. Système selon la revendication 20 et dans lequel l'architecture comprend un registre (18) dans lequel sont enregistrées des données relatives à l'identité et à la position de stations mobiles d'abonnés par rapport au système, comprenant des stations mobiles telles que lorsque dans une région servie par un système autre que ledit système mais qui a une liaison de télécommunications (12) avec ledit système et dans lequel le processeur est connecté de façon opérationnelle au registre et qui a pour fonction de détecter que la deuxième station mobile (20) n'est pas dans une région servie par le système (1) sur la base d'informations en provenance du registre et de générer un signal en conséquence indiquant un numéro de téléphone par lequel la deuxième MS peut être jointe par une liaison en duplex total.
